Europäisches Patentamt

European Patent Office

Office européen des brevets

(19)

(11) Veröffentlichungsnummer: **0 136 276**
**B1**

(12) **EUROPÄISCHE PATENTSCHRIFT**

(45) Veröffentlichungstag der Patentschrift:
09.12.87

(21) Anmeldenummer: 84850249.8

(22) Anmeldetag: 27.08.84

(51) Int. Cl.⁴: **B 23 K 35/40**

(54) Verfahren und Einrichtung für die Herstellung einer pulvergefüllten Schweisselektrode.

(30) Priorität: 29.08.83 SE 8304658

(43) Veröffentlichungstag der Anmeldung:
03.04.85 Patentblatt 85/14

(45) Bekanntmachung des Hinweises auf die Patenterteilung:
09.12.87 Patentblatt 87/50

(84) Benannte Vertragsstaaten:
CH DE FR GB IT LI NL

(56) Entgegenhaltungen:
JP - A - 11 269 483
JP - A - 44 099 383

(73) Patentinhaber: Holmgren, Werner Adolf,
Blodboksgatan 8, S-421 74 Västra Frölunda (SE)

(72) Erfinder: Holmgren, Werner Adolf, Blodboksgatan 8,
S-421 74 Västra Frölunda (SE)

(74) Vertreter: Frisch, Kurt, c/o ESAB AB Box 8004,
S-402 77 Göteborg (SE)

### Beschreibung

Die Erfindung bezieht sich auf ein Verfahren zur kontinuierlichen Herstellung einer pulvergefüllten, röhrenförmigen Schweisselektrode, bei dem ein Metallstrang während seines Vorschubs mit einer bestimmten Geschwindigkeit in eine Rinne und anschliessend durch Zusammenführung der beiden Kanten der Rinne in ein Rohr verformt wird und die Kanten kontinuierlich unter Bildung einer Schweissstelle zusammengeschweisst werden, das Pulver im Abstand an der Schweissstelle vorbei in das geschweisste Rohr eingeführt wird und danach der Querschnitt des pulvergefüllten Rohres auf ein gewünschtes Mass reduziert wird, wobei der Metallstrang zumindest unmittelbar vor und hinter der Schweissstelle in einem Winkel zur Horizontalebene nach abwärts vorgeschoben wird, der grösser ist als der Schüttwinkel des Pulvers, und das Pulver von einer solchen Höhe in das geschweisste Rohr fällt, dass es die Schweissstelle mit einer Geschwindigkeit passiert, die grösser ist als die Vorschubgeschwindigkeit des Metallstranges an der Schweissstelle.

Eine pulvergefüllte Schweisselektrode dieser Gattung mit einem geschweissten Rohr, d. h. einer nahtlosen Hülle, weist einige wesentliche Vorteile gegenüber einer pulvergefüllten Schweisselektrode auf, deren Hülle aus einem in Rohrform umgeformten Band mit Falz oder geschlossener, jedoch ungeschweisster Fuge besteht. Das Pulver in der nahtlosen Schweisselektrode ist gegen die umgebende Atmosphäre vollkommen abgeschirmt und daher auch gegen eine unerwünschte Feuchtigkeitsaufnahme aus der Luft vollkommen geschützt. Weiter ist es möglich, die nahtlose Schweisselektrode während der Herstellung beispielsweise durch ein Reinigungsbad zu leiten, um ihre Oberfläche von Verunreinigungen, z. B. Ziehölresten, zu befreien. Ein weiterer Vorteil liegt darin, dass die nahtlose Elektrode durch ein Verkupferungsbad geführt werden kann. Die oberflächliche Verkupferung der Elektrode verbessert wesentlich die Stromüberführungseigenschaften zwischen der Elektrode und einem schweissstromzuführenden Elektrodenkontakt.

Unter dem Schüttwinkel, der ein Mass für die innere Reibung des Pulvers ist, wird derjenige Winkel verstanden, den die Mantelfläche des Schüttkegels mit der Horizontalebene bildet, wenn das Pulver von oben von einem Punkt auf eine Unterlage aufgeschüttet wird. Der Schüttwinkel ist ein für jedes Pulver spezifischer Winkel. Der Schüttwinkel von Schweisspulver beträgt in grober Annäherung im Durchschnitt etwa 45°. Bedeutende Abweichungen von diesem Mittelwert können jedoch vorkommen. Er hängt unter anderem von der Zusammensetzung des Pulvers, der Korngrösse und Kornform des Pulvers ab.

Ein Verfahren der eingangs erwähnten Gattung ist durch die JP-A-58-44993 bekannt geworden. Beim Füllen des Rohres gelangen Atmosphärenreste ins Rohrinnere. Es hat sich gezeigt, dass die Atmosphärenreste beim Schweissen die Brenneigenschaften des Lichtbogens ungünstig beeinflussen, was durch einen unruhig brennenden Lichtbogen zum Ausdruck kommt. Ein derartiger Lichtbogen verursacht Spritzverluste und beeinflusst nachteilig das Nahtaussehen und damit die Schweissqualität.

Es ist Aufgabe der Erfindung, ein Verfahren zu schaffen, mit dem eine nahtlose, pulvergefüllte Schweisselektrode hergestellt wird, die die genannten Nachteile nicht aufweist. Gemäss der Erfindung wird der Freiraum zwischen den Pulverpartikeln im geschweissten Rohr mit Schutzgas gefüllt. Die atmosphärischen Lufteinschlüsse werden durch das Schutzgas vertrieben und die Lichtbogenstabilität beim Schweissen der Elektrode wird wesentlich verbessert.

Die Erfindung bezieht sich auch auf eine Einrichtung zur Ausführung des Verfahrens nach dem Oberbegriff des Patentanspruchs 2. Gemäss der Erfindung führt eine an einen Schutzgasbehälter angeschlossene Gasleitung mit einem Gasmundstück in das Innere der noch nicht geschlossenen Rinne.

Gemäss einer vorteilhaften Ausführung der Erfindung ist mittels eines in der Leitung eingeschalteten Ventils im schutzgaserfüllten Abschnitt des Rohres zwischen dem Gasmundstück und dem Niveau ein geringer Überdruck einstellbar.

Ein Ausführungsbeispiel der Erfindung wird nachstehend im Zusammenhang mit der beigefügten Zeichnung beschrieben.

Fig. 1 zeigt schematisch eine Einrichtung für die Herstellung einer pulvergefüllten Schweisselektrode;

Fig. 2 bis Fig. 6 zeigen Schnitte durch den Metallstrang an verschiedenen Stellen der Einrichtung;

Fig. 7 zeigt schematisch eine Schweissstation;

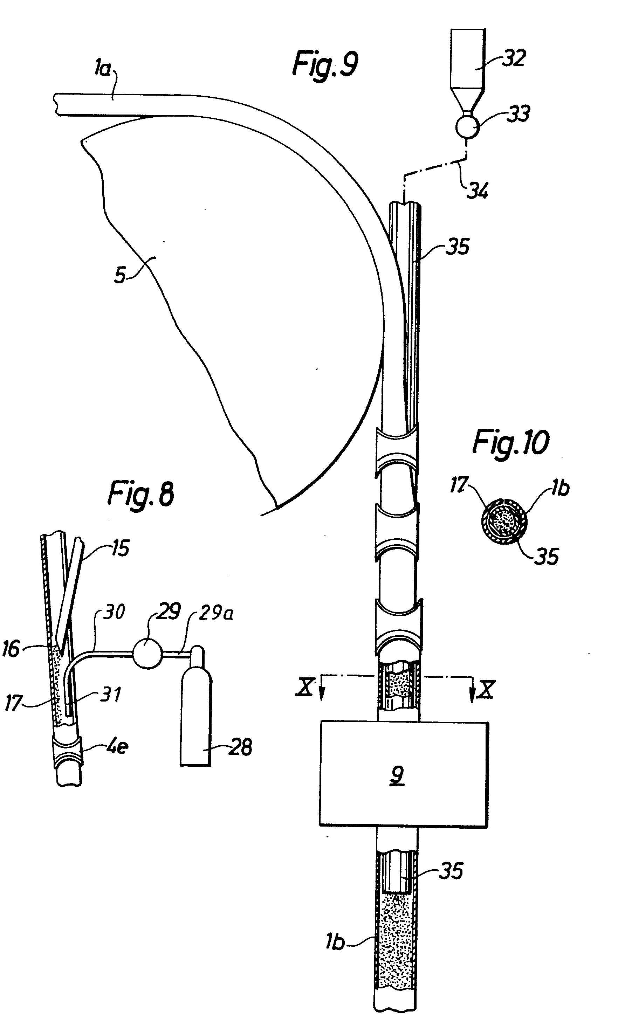

Fig. 8 zeigt eine etwas geänderte Ausführung der Einrichtung gemäss Fig. 1;

Fig. 9 zeigt eine weitere etwas abgeänderte Ausführung dieser Einrichtung, und

Fig. 10 ist ein Schnitt längs X–X in Fig. 9.

Ein Metallstrang 1, aus dem die Hülle einer nahtlosen pulvergefüllten Schweisselektrode hergestellt werden soll, hat am Beginn des Herstellungsverfahrens die Form eines Bandes, das von einer Spule 2 abgewickelt und einer Kalibrierungseinrichtung 3 zugeführt wird. Die Dimensionen des Metallstranges sind stark übertrieben dargestellt. Das Band der Spule 2 wird üblicherweise durch Schlitzung eines breiten Metallbandes gewonnen. Diese Herstellungsart hat häufig zur Folge, dass der Querschnitt des Bandes über die Länge des Bandes nicht gleichförmig bleibt. Die Flachseiten zeigen oftmals eine etwas konvexe Form. Um eine gute Schweissqualität gewährleisten zu können, ist es notwendig, dass das Verhältnis von Hüllengewicht zu Pulvergewicht über die ganze Länge der Elektrode konstant bleibt. Mit der Kalibrierungseinrichtung wird der erforderliche konstante Querschnitt über die Gesamtlänge des Bandes erzielt.

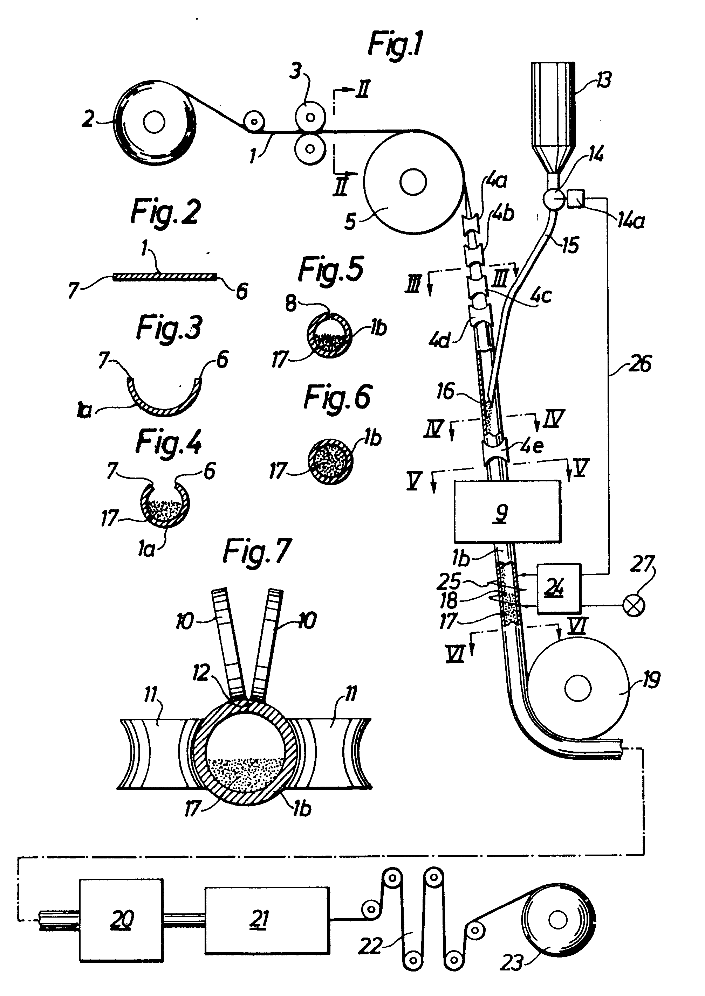

Das hier von der Spule 2 durch die Kalibrierungseinrichtung 3 vorgeschobene Band 1 wird über eine obere Umlenkrolle 5 geführt, von der das Band steil nach abwärts zu einer unteren Umlenkrolle 19 geführt wird. Auf dieser Strecke bildet das Band mit der Horizontalebene einen Winkel, der nur etwas geringer als 90° ist. Unterhalb der Umlenkrolle 5 wird das Band zunächst durch die Formierungsrollen 4a, 4b und 4c sukzessive in eine Rinne 1a umgeformt. Weitere Formierungsrollen 4d und 4e formen die Rinne 1a schliesslich in ein Rohr 1b. Die Anzahl der Formierungsrollen, die hier nur schematisch dargestellt sind, kann variieren. Die Veränderung der Querschnittsform im Laufe der Umformung ist in den Fig. 2 bis Fig. 5 dargestellt. Diese Querschnitte sind in einem grösseren Massstab wiedergegeben. Die Querschnittsübergangsformen vom Band zum geschlossenen Rohr können je nach dem angewandten Herstellungsverfahren sehr unterschiedliches Aussehen haben. Diese Verfahren zur Herstellung eines Rohres aus einem Band sind allgemein bekannt und nicht Gegenstand der vorliegenden Erfindung.

Wenn der Metallstrang schliesslich die Form eines Rohres 1b hat, bilden die Kanten 6, 7 der Rinne eine Fuge 8. Hier wird das Rohr mit kreisförmigem Querschnitt gezeigt (Fig. 5). Wie oben erwähnt, sind auch andere Querschnittsformen denkbar, insbesondere elliptische Formen, wobei die lange Achse der Ellipse durch die Fuge gelegt ist. Das Rohr 1b wird längs der Fuge kontinuierlich in einer hier nur angedeuteten Schweissstation 9 geschweisst und erhält den in Fig. 6 gezeigten Querschnitt.

Für die Schweissung des Rohres können verschiedene kontinuierliche Schweissverfahren mit oder ohne Zusatzmaterial zur Anwendung kommen. Es wird dabei eine hohe Schweissgeschwindigkeit von etwa 0,5 m/s und mehr und gleichzeitig eine geringe Schweissenergie angestrebt, um die Erwärmung der Schweissstelle und deren Umgebung möglichst niedrig zu halten. Zu den kontinuierlichen Schweissverfahren werden beispielsweise auch solche Schweissverfahren gezählt, bei denen die Energiezufuhr zur Schweissstelle pulsierend erfolgt, wie Impulsschweissen, Wechselstromschweissen und ähnliche Verfahren.

Eine für diese Zwecke geeignete Schweisseinrichtung wird in Fig. 7 schematisch gezeigt. Es handelt sich um eine Widerstandsnahtschweissmaschine mit zwei Rollenelektroden 10 und zwei Stützrollen 11 für das Zusammenpressen der Kanten 6, 7 an der Schweissstelle 12. Die Schweissstelle verbleibt innerhalb der Schweissstation 9 stationär, während der Metallstrang 1 mit einer vorgegebenen Geschwindigkeit, nämlich der Schweissgeschwindigkeit, durch die Schweissstation vorgeschoben wird.

Von einem Pulverbehälter 13 mit einer Dosierungseinrichtung 14 mit angeschlossenem Pulvermengenregler 14a wird das Pulver 17 durch eine Pulverleitung 15 der nicht vollständig geschlossenen Rinne 1a zugeführt. Das durch die Pulverleitung 15 herabstürzende Pulver wird dabei von einem Mundstück 16 am vorderen Ende der Pulverleitung 15 zum Grunde der Rinne 1a geleitet und gleitet und stürzt längs der stark geneigten Rinne 1a an der Schweissstelle in der Schweissstation 9 vorbei nach abwärts in das geschweisste Rohr 1b. Die Geschwindigkeit des fallenden Pulvers nimmt dabei dauernd zu. Die Länge der Fallstrecke für das Pulver zwischen einem oberen Niveau – hier der Dosierungseinrichtung 14 – und der stationären Schweissstelle in der Schweissstation 9 wird so gross gewählt, dass die Geschwindigkeit des Pulvers bei der Passage der Schweissstelle mindestens etwa 1,5 mal, vorzugsweise etwa 2 mal so gross ist wie die Geschwindigkeit des Metallstranges in der Schweissstation.

Das Pulver 17, das bei der Passage der Schweissstation 9 nur einen Teil, hier etwa nur die Hälfte, des Rohrquerschnittes in Anspruch nimmt, stürzt dank der Führung im Rinnengrund des steil geneigten Metallstranges im Abstand an der Schweissstelle vorbei. Der Fall des Pulvers wird unterhalb der Schweissstelle durch die Umlenkung des Materialstranges in eine horizontale Richtung oder gegebenenfalls in eine Richtung, die mit der Horizontalebene einen Winkel einschliesst, der kleiner ist als der Schüttwinkel des Pulvers, abgebremst. Das Pulver sammelt sich dadurch bei einem Niveau 18, das sich in einem solchen Abstand unterhalb der Schweissstelle befindet, dass die Schweisswärme das Pulver nicht mehr nachteilig beeinflussen kann. Die Lage des Niveaus 18 wird durch eine entsprechende Dosierung der Pulvermenge pro Zeiteinheit durch den Mengenregler 14a erreicht. Mit einem Anzeigegerät wird der Pulverfüllfaktor des Rohres im Bereich des Niveaus 18 gemessen. Das Anzeigegerät 24 ist mit einer das Rohr 1b umgebenden Spule 25 ausgerüstet, mit der die gemeinsame Permeabilität des Rohres und der Pulverfüllung gemessen wird. Wenn der Pulverfüllfaktor beim Niveau 18 nicht einem vorgegebenen Wert entspricht, gibt das Anzeigegerät 24 ein Fehlersignal über eine Signalleitung 26 an den Pulvermengenregler 14a ab, mit dem die Pulvermengeneinstellung geändert wird, bis der richtige Füllfaktor wieder erreicht ist. Gleichzeitig wird die Abweichung der Pulverfüllung von dem vorgegebenen Wert auch durch eine Warnungslampe 27 angezeigt.

Das pulvergefüllte Rohr 1b wird von der unteren Umlenkrolle 19 einer Walzeinrichtung 20 zugeführt, wo der Querschnitt in einem gewissen Ausmass verringert wird. Danach wird der Querschnitt durch einen Ziehvorgang in einer Ziehanlage 21 auf den gewünschten Elektrodendurchmesser reduziert. Der Ziehvorgang erfolgt zweckmässigerweise mit Zwischenglühung der Elektrode in mehreren Stufen. Wie bereits oben erwähnt, ist es dank der nahtlosen Form der Elektrodenhülle denkbar, in einem Reinigungsbad die Elektrodenoberfläche von Oberflächenverunreinigungen zu befreien und die Elektrode in einem Verkupferungsbad mit einem Kupferbelag zu versehen. Die fertige Elektrode passiert noch einen Schlingenvorrat 22 zum Ausgleich von Längenvariationen, bevor sie auf einer Spule 23 aufgewickelt wird.

Der Vorschub des Metallstranges 1 erfolgt mit Hilfe der Formierungsrollen 4a–4e, den Umlenkrollen 5, 19 und der Walzeinrichtung 20 und Ziehanlage 21, die alle mit entsprechenden hier nicht gezeigten Vorschubeinrichtungen versehen sind. Diese Einrichtungen sind derart betrieblich aufeinander abgestimmt, dass die Geschwindigkeit des Metallstranges stets an die Dimension angepasst ist. So ist die Geschwindigkeit des Metallstranges durch die Ziehanlage selbstverständlich wesentlich grösser als die Geschwindigkeit des Metallstranges bei der Schweissstelle.

Wenn besonders hohe Anforderungen an die Qualität der Schweisselektrode gestellt werden, empfiehlt es sich, die Anlage mit einer Einrichtung für die Zufuhr von Schutzgas zu versehen. Ein Schutzgasbehälter ist mittels einer Leitung 29a mit einem Ventil 29 verbunden, von dem eine Gasleitung 30 mit einem Gasmundstück 31 in das Innere der noch nicht geschlossenen Rinne führt. Die Gaszufuhr wird derart geregelt, dass der Abschnitt des Rohres zwischen dem Gasmundstück 31 und dem Niveau 18 unter einem geringen Überdruck gehalten wird, so dass dieser Abschnitt im wesentlichen von Schutzgas, beispielsweise $CO_2$, erfüllt ist.

Bei einer etwas abgeänderten Ausführung der Einrichtung wird der Metallstrang im wesentlichen vertikal von der oberen Umlenkrolle 5 nach abwärts geführt. Das Pulver wird von einem Pulverbehälter 32 mit einem Mengenregler 33 und einer hier nur angedeuteten Pulverleitung 34 durch ein Füllrohr 35 in das geschweisste Rohr unterhalb der Schweissstelle eingeführt. Das Füllrohr 35 stellt dabei das vordere Ende der Pulverleitung 34 dar und wird von oben in das geschweisste Rohr eingeschoben. Das durch das Füllrohr 35 mit grösserer Geschwindigkeit als der des Metallstranges herabfallende Pulver wird auf diese Weise im Abstand an der Schweissstelle vorbeigeführt, da das Füllrohr eine Trennwand zwischen Schweissstelle und Pulver bildet, und zudem nur sehr kurzzeitig der Schweisswärme ausgesetzt. Im übrigen gleicht die Einrichtung derjenigen, die im Zusammenhang mit Fig. 1 beschrieben wurde.

Im Rahmen der vorliegenden Erfindung ist es auch denkbar, auf die obere Umlenkrolle zu verzichten und den Metallstrangvorrat, die Kalibrierungseinrichtung und alle Formierungsrollen längs einer abwärts gerichteten Herstellungsbahn anzubringen. Die Umlenkung des Metallstranges muss nicht notwendigerweise mit Umlenkrollen erfolgen. Es ist denkbar, auch andere Einrichtungen zu verwenden, mit denen eine Führung des Materialstranges im Bereich der Schweissstelle mit der erforderlichen Neigung erhalten werden kann.

**Patentansprüche**

1. Verfahren zur kontinuierlichen Herstellung einer pulvergefüllten, röhrenförmigen Schweisselektrode, bei dem ein Metallstrang (1, 1a, 1b) während seines Vorschubs mit einer bestimmten Geschwindigkeit in eine Rinne (1a) und anschliessend durch Zusammenführung der beiden Kanten (6, 7) der Rinne in ein Rohr (1b) verformt wird und die Kanten (6, 7) kontinuierlich unter Bildung einer Schweissstelle (12) zusammengeschweisst werden, das Pulver (17) im Abstand an der Schweissstelle vorbei in das geschweisste Rohr (1b) eingeführt wird und danach der Querschnitt des pulvergefüllten Rohres auf ein gewünschtes Mass reduziert wird, wobei der Metallstrang (1, 1a, 1b) zumindest unmittelbar vor und hinter der Schweissstelle (12) in einem Winkel zur Horizontalebene nach abwärts vorgeschoben wird, der grösser ist als der Schüttwinkel des Pulvers, und das Pulver (17) von einer solchen Höhe in das geschweisste Rohr fällt, dass es die Schweissstelle mit einer Geschwindigkeit passiert, die grösser ist als die Vorschubgeschwindigkeit des Metallstranges an der Schweissstelle, dadurch gekennzeichnet, dass der Freiraum zwischen den Pulverpartikeln im geschweissten Rohr mit Schutzgas gefüllt wird.

2. Einrichtung zur Ausführung des Verfahrens nach Patentanspruch 1, die mit einem Metallstrangvorrat (2), einer Einrichtung für den Vorschub des Metallstranges (1, 1a, 1b), einer Formierungsanordnung (4a–4e) für die Umformung des Metallstranges in eine Rinne (1a) und anschliessend durch Zusammenführung der Kanten (6, 7) in ein Rohr (1b), einer Schweisseinrichtung (9) für das kontinuierliche Zusammenschweissen der beiden, eine Schweissfuge bildenden Kanten (6, 7) der Rinne (1a), einem Pulvermagazin (13), einer Pulverleitung (15) mit einem mit dem Metallstrang zusammenarbeitenden Mundstück (16) für die Zuführung des Pulvers (17) vom Pulvermagazin zum Metallstrang, einer in der Pulverleitung angebrachten Einrichtung (14, 14a) für die Dosierung der zugeführten Pulvermenge pro Zeiteinheit und eine im Anschluss an die Schweissstation (9) angebrachte Einrichtung (20, 21) für die Querschnittsreduktion des geschweissten, pulvergefüllten Rohres versehen ist, dass weiter eine Führungseinrichtung (5, 19) für die Abwärtsführung des Metallstranges unmittelbar vor und nach seinem Durchlauf durch die Schweissstation (9) in einer Richtung, die mit der Horizontalebene einen Winkel einschliesst, der grösser ist als der Schüttwinkel des Pulvers, vorgesehen ist, dass eine Fallstrecke für das Pulver (17) zumindest teilweise aus der Pulverleitung (15) und dem oberhalb der bezüglich der Einrichtung stationären Schweissstelle (12) zur Rinne und unterhalb der Schweissstelle zum geschweissten Rohr umgeformten Metallstrang gebildet wird und diese Fallstrecke sich zwischen einem oberen Niveau oberhalb des Mundstückes (16) und einem unteren Niveau (18) unterhalb der Schweissstelle erstreckt, wobei die Länge der Fallstrecke zwischen dem oberen Niveau und der Schweissstelle für die Beschleunigung des fallenden Pulvers auf eine Geschwindigkeit bei der Passage der Schweissstelle bemessen ist, die grösser als die Vorschubgeschwindigkeit des Metallstranges an der Schweissstelle ist, und eine zweite Führungseinrichtung (1a, 1b; 35) vorgesehen ist, die das Pulver (17) im Abstand an der Schweissstelle vorbeileitet, dadurch gekennzeichnet, dass eine an einen Schutzgasbehälter (28) angeschlossene Gasleitung (29a, 30) mit einem Gasmundstück (31) in das Innere der noch nicht geschlossenen Rinne führt.

3. Einrichtung nach Patentanspruch 2, dadurch gekennzeichnet, dass mittels eines in der Leitung (29a, 30) eingeschalteten Ventils (29) im schutzgaserfüllten Abschnitt des Rohres zwischen dem Gasmundstück (31) und dem Niveau (18) ein geringer Überdruck einstellbar ist.

**Claims**

1. Process for the continuous production of a powder-filled tubular welding electrode, in which a metal extrusion (1, 1a, 1b) is shaped into a gutter (1a) during its advance at a specific speed and subsequently into a tube (1b) as a result of the joining together of the two edges (6, 7) of the gutter, and the edges (6, 7) are welded together continuously to form a welding point (12), the powder (17) is introduced into the welded tube (1b) past the welding point at a distance, and the cross-section of the powder-filled tube is then reduced to a desired dimension, the metal extrusion (1, 1a, 1b) being advanced downwards, at least immediately in front of and behind the welding point (12), at an angle to the horizontal plane which is greater than the angle of repose of the powder, and the powder (17) falling into the welded tube from such a height that it passes the welding point at a speed which is higher than the advancing speed of the metal extrusion at the welding point, characterized in that the free space between the powder particles in the welded tube is filled with shielding gas.

2. Apparatus for carrying out the process according to patent claim 1, which is equipped with a stock of metal extrusion (2), a device for advancing the metal extrusion (1, 1a, 1b), a shaping arrangement (4a–4e) for shaping the metal extrusion into a gutter (1a) and subsequently into a tube (1b) as a result of the joining together of the edges (6, 7), a welding device (9) for continuously welding together the two edges (6, 7) of the gutter (1a) which form a welded joint, a powder magazine (13), a powder line (15) with a mouthpiece (16) interacting with the metal extrusion and intended for feeding the powder (17) from the powder magazine to the metal extrusion, a device (14, 14a) provided in the powder line and intended for dispensing the fed quantity of powder per unit of time, and a device (20, 21) following the welding station (9) and intended for reducing the cross-section of the welded, powder-filled tube, there being, furthermore, a guide device (5, 19) for guiding the metal extrusion downwards, immediately before and after it passes through the welding station (9), in a direction forming with the horizontal plane and angle greater than the angle of repose of the powder, a falling zone for the powder (17) being formed at least partially from the powder line (15) and the metal extrusion shaped into a gutter above the welding point (12), stationary in relation to the apparatus, and into the welded tube below the welding point, and this falling zone extending between and upper level above the mouthpiece (16) and a lower level (18) below the welding point, the length of the falling zone between the upper level and the welding point being calculated to ensure the acceleration of the falling powder during its passage past the welding point to a speed higher than the advancing speed of the metal extrusion at the welding point, and there being a second guide device (1a, 1b; 35) which conveys the powder (17) past the welding point at a distance, characterized in that a gas line (29a, 30) connected to a shielding gas vessel (28) and having a gas mouthpiece (31) leads into the interior of the gutter which is not yet closed.

3. Apparatus according to patent claim 2, characterized in that, by means of a valve (29) inserted in the line (29a, 30), a slight excess pressure can be set in the portion of the tube filled with shielding gas between the gas mouthpiece (31) and the level (18).

**Revendications**

1. Procédé pour réaliser en continu une électrode de soudage constituée par une gaine tubulaire remplie de poudre, en faisant avancer une bande métallique (1, 1a, 1b) à une vitesse déterminée, pour la transformer progressivement en une gouttière profilée (1a), puis en un tube (1b) à bords jointifs (6, 7) qu'on soude ensuite ensemble en continu en effectuant une soudure (12) à poste fixe, cependant qu'on introduit la poudre (17) dans le tube soudé (1b) en la faisant passer à l'écart de la soudure (12), après quoi on façonne le tube rempli de poudre pour en réduire le diamètre jusqu'au calibre voulu; des moyens étant prévus pour guider la gaine métallique en la maintenant inclinée à un angle déterminé par rapport au plan horizontal, au cours de son avance vers le bas, au moins immédiatement avant et après l'endroit où s'effectue la soudure (12), cet angle d'inclinaison étant supérieur à l'angle d'éboulement naturel de la poudre, et pour faire tomber la poudre (17) dans le tube soudé, d'une hauteur telle que la poudre passe en regard de l'endroit de la soudure à une vitesse supérieure à la vitesse d'avance de la gaine métallique au même endroit, caractérisé en ce qu'on remplit avec un gaz de protection le volume libre existant entre les particules de poudre dans le tube soudé.

2. Dispositif pour la mise en œuvre du procédé selon la revendication 1, comportant un système d'alimentation (2) pour l'arrivée de la bande métallique (1, 1a, 1b), un système de profilage (4a–4e) pour transformer la bande en une gouttière profilée (1a) puis en un tube (1b) à bords jointifs (6, 7) qu'on soude ensemble en continu au moyen d'un système de soudage (9), un réservoir (13) pour la poudre et une canalisation d'alimentation (15) dont la sortie (16) est associée à la gaine métallique pour y introduire la poudre (17), un système de réglage (14, 14a) monté sur la canalisation d'alimentation (15) pour régler le débit de la poudre par unité de temps, et un système de façonnage (20, 21), disposé à la suite du système de soudage (9), pour réduire la section transversale du tube soudé rempli de poudre; le dispositif comportant, en outre, un système de guidage (5, 19), pour maintenir la gaine métallique inclinée à un angle déterminé par rapport au plan horizontal au cours de son avance vers le bas, immédiatement avant et après son passage dans le poste de soudage (9), cet angle d'inclinaison étant supérieur à l'angle d'éboulement naturel de la poudre; un trajet de chute étant ainsi ménagé pour la poudre (17), au moins dans la partie terminale de la canalisation d'alimentation (15) et dans une partie de la gaine métallique comprise entre un niveau supérieur situé à l'endroit de la sortie (16) de la canalisation d'alimentation en poudre, au-dessus du poste de soudage (9), et un niveau inférieur (18) situé au-dessous du poste de soudage, la longueur du trajet de chute de la poudre, entre le niveau supérieur et l'endroit du tube où s'effectue la soudure, étant prévue pour donner à la poudre une vitesse de chute supérieure à la vitesse d'avance de la gaine métallique à l'endroit de la soudure; d'autres moyens de guidage (1a, 1b; 35) étant prévus, en outre, pour faire passer la poudre (17) à l'écart de l'endroit où s'effectue la soudure sur le tube, caractérisé en ce qu'il comporte un réservoir de gaz de protection (28) débitant dans une canalisation (29a, 30) dont l'extrémité (31) débouche à l'intérieur de la gouttière profilée encore ouverte formée par la gaine métallique en cours de façonnage.

3. Dispositif selon la revendication 2, caractérisé en ce qu'il comporte une soupape de réglage de débit (29) montée sur la canalisation d'alimentation en gaz de protection (29a, 30) pour assurer une légère surpression de gaz de protection dans la partie de la gaine tubulaire remplie par ce gaz, entre le niveau de la sortie (31) de la canalisation d'alimentation (30) et le niveau (18).

Fig.1

Fig.2

Fig.5

Fig.3

Fig.6

Fig.4

Fig.7

0136276

Fig.9

Fig.8

Fig.10

9